# EUROPEAN PATENT APPLICATION

(11) **EP 1 677 566 A1**
(43) Date of publication of application: **05.07.2006**
(21) Application number: 06380002.3
(22) Date of filing: 03.01.2006
(51) Int. Cl.: H04Q 9/00

(54) **System for the monitoring, control and management of monuments and buildings**

(30) Priority: 03.01.2005 ES 200500002
(71) Applicant: Pérez Legarre, Fernando Javier, 50600 Ejea De Los Caballeros Zaragoza (ES)
(72) Inventor: The designation of the inventor has not yet been filed
(74) Representative: Ungria Lopez, Javier

(57) **Abstract**

System for the follow-up, control and management of monuments and buildings, which is useful to carry out a continuous follow-up and control of the evolution that monuments and buildings undergo, especially those belonging to the historic-artistic heritage with the passing of time, in order to take prompt appropriate action for the preservation thereof, the system comprising: a plurality of sensors and/or measuring instruments-sensors (1) installed strategically in the structure of the monument (2) to be controlled; a peripheral computer (3) connected to the plurality of sensors and/or measuring instruments-sensors (1) regarding the corresponding monument (2), the peripheral computers being provided with databases (4) wherein standard parameters regarding the variables to be controlled are stored; a central computer (5) connected to different peripheral computers (3) regarding the monuments (2) to be controlled and managed.

## Description

As expressed in the title of the present specification, the following invention refers to a system for the follow-up, control and management of monuments and buildings, which is useful to carry out a continuous follow-up and control of the evolution that monuments and buildings undergo with the passing of time in order to be able to take prompt appropriate action for the preservation thereof. Hence, a first aim of the system that is presented is to be able to have a continuous follow-up and control of the state of the controlled monument, making it possible to act immediately when any agent can affect the monument.

Hence, by means of the system that is taught when any effect that can affect the monument is detected, it will be possible to act immediately minimizing the consequences thereof for the purpose of being able to carry out operations of preservation and maintenance, thus avoiding possible wear and tear.

### FIELD OF THE USE

The present specification describes a system for the follow-up, control and management of monuments and buildings and it is especially applicable for the installation in monuments and buildings belonging to the historic-artistic heritage.

### BACKGROUND OF THE INVENTION

As it is known, different factors affect to monuments and buildings in a larger or smaller degree, in such a way that the historic-artistic monuments and buildings bequeathed to humanity many years ago can be affected to in a larger degree.

In this way, for the purpose of being able to preserve those monuments belonging to the historic-artistic heritage in the best possible state, it is necessary to carry out a continuous follow-up of their evolution, which is not always done, in order to be able to take the necessary steps of preservation before damage that requires significant operations of restoration can take place. In other words, it is possible to preserve the monuments before having to restore them.

Hence, among the different factors that can affect the preservation of historic-artistic monuments and buildings that to a larger degree can affect them is the environmental impact that causes very varied physicochemical reactions.

In this way, the only way to be able to conduct a control of the state in which monuments, mainly those belonging to the historic-artistic heritage, are in, is to carry out every certain amount a time visual controls, because it can happen that the possible effects are not detected or that irreversible damage has taken place.

On the other hand, periodic checks are normally conducted to verify the state of the roofing and gutters carrying off rainwater and these in no way suffice to maintain a suitable preservation of historic-artistic monuments.

### DESCRIPTION OF THE INVENTION

The present specification describes a system for the follow-up, control and management of monuments and buildings, which is useful to carry out a continuous follow-up and control of the evolution that monuments and buildings undergo, mainly, those belonging to the historic-artistic heritage with the passing of time, so that it is possible to take prompt appropriate action for the maintenance and preservation thereof, in such a way that the system comprises:
- a plurality of sensor and/or measuring instruments-sensors strategically installed in the structure of the monument to be controlled;
- a computer connected to the plurality of sensors and/or measuring instruments-sensors regarding the corresponding monument, the computer being provided with some databases wherein some standard parameters regarding the variables to be controlled are stored;
- a central computer connected to the different peripheral computers regarding the monuments to be controlled and managed;

The plurality of sensors and/or measuring instruments-sensors will periodically communicate to the pheripheral computer, which they are connected to, the measurements taken regarding the different variables to be controlled.

The measurements communicated by the plurality of sensors and/or measuring instruments-sensors to the corresponding peripheral computer are managed by this peripheral computer comparing them with the standard measurements stored in the databases thereof, in order to send to the central computer, which the peripheral computer is in communication with, an alarm signal if the measurements taken are higher than those of the stored standard measurements.

Likewise, the information desired from any of the peripheral computers regarding the corresponding controlled monuments and communicated with the pheripheral computers can be obtained from the central computer.

On the other hand, the information desired from any of the peripheral computers regarding the corresponding monuments to be controlled could be obtained by a PDA or mobile phone.

In this way, it is a matter of being able to have a continuous follow-up and control of the desired monuments in order to be able to act as quickly as possible whenever there is a small variable.

Hence, it is a question of being able to maintain the state of monuments by carrying out a preventative control that permits rapid operations of maintenance and preservation before damage takes place without the need to reach the state of wear and tear that require restoration.

The variables to be controlled by the plurality of sensors and/or measuring instruments-sensors that inform the corresponding peripheral computer can be:
- speed of wind (anemometer);
- humidity of the air (hygrometer);
- moisture of stone (hygrometric measurement);
- atmospheric pollution;
- amount of rainfall (rain gauge);
- movement caused (seismometer);
- temperature;
- visual control (optical camera); and;
- cracks (crack measuring instrument).

Hence, the different sensors and/or measuring instruments-sensors will periodically take the measurements in order to communicate them to the peripheral computer that they are communicated with, for the purpose of comparing these measurements with the standard measurements stored therein.

In this way, in those cases when a measuring instrument is needed, such as a thermometer, a sensor that will send the information sent by the measuring instrument is communicated thereto and the sensor and measuring instrument are communicated to each other.

In order to complete the description that is going to be made hereinafter, and for the purpose of providing a better understanding of the characteristics of the invention, a set of drawings, in whose figures the most characteristic details of the invention are represented in an illustrative and non-restrictive manner, is attached to the present specification.

### BRIEF DESCRIPTION OF THE DRAWINGS

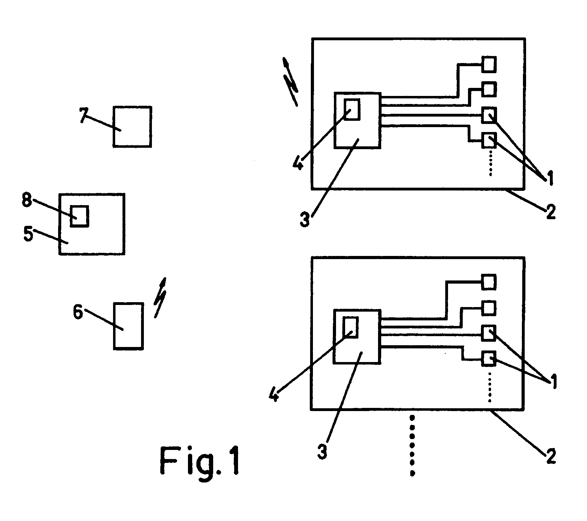

Figure 1 shows a schematic diagram wherein one can see the communication of a plurality of sensors and/or measuring instruments-sensors with corresponding peripheral computers, regarding the respective monuments, the cited peripheral computers being communicated with the central computer.

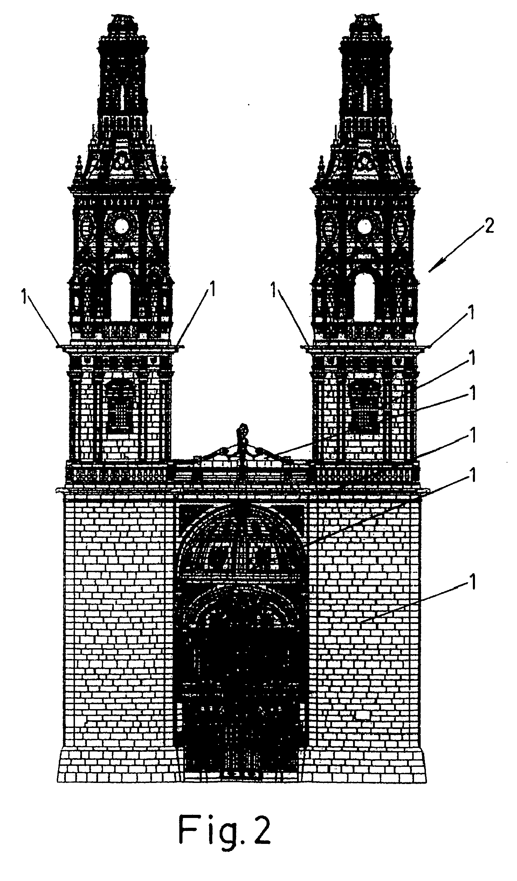

Figure 2 shows a front view of a monument wherein a plurality of sensors and/or measuring instruments-sensors have been installed.

### DESCRIPTION OF A PREFERRED EMBODIMENT

In view of the commented figures and in accordance with the numbering used, we can see how a plurality of sensors 1 and/or measuring instruments (1) have been installed in a building 2. These sensors 1 and/or sensorized measuring instruments are communicated with a peripheral computer 3. The peripheral computer (3) is provided with some databases 4 wherein some standard parameters regarding the variables to be measured by the sensors 1 and/or measuring instruments-sensors have been stored.

On the other hand, the different peripheral computers 3 corresponding to respective monuments 2 are in continuous communication with a central computer 5 with some databases 8.

Hence, the plurality of sensors 1 and/or measuring instruments-sensors send the measurements taken to the peripheral computer 3 with which they are communicated, in such a way that said measurements are compared with the standard measurements stored in the databases 4 thereof, in such a way that if any of the measurements taken by the plurality of sensors 1 and/or measuring instruments-sensors exceed the stored standard measurement regarding the measurement, the peripheral computer itself 3 sends an alarm signal to the central computer 5 , so that appropriate action can be taken.

The plurality of sensors 1 and/or measuring instruments/sensors will be able to take measurements every predetermined certain amount of time or else they will be able to be taken when the pertinent instruction for this purpose is given by the central computer 5 itself. This permits continuous control of the state of the monument to be controlled, in such a way that in view of any incident that can affect the preservation and maintenance of the monument, immediate action can be taken.

Likewise, the information stored in the different peripheral computers 3 can be obtained by means of a PDA 7 or a mobile phone 6, by way of any known technology.

The system that is presented is especially designed for the installation thereof in all types of monuments belonging to the historic-artistic heritage for the purpose of taking action immediately in view of any incident that affects the state of the monument in order to carry out the necessary operations of conservation, avoiding the state from becoming worse and having to carry out more or less extensive restoration. In other words, it is a matter of taking action before damage is produced.

For this purpose, a periodic follow-up with a certain visual direct control is carried out, for which purpose there will be a movable crane by which the specialized staff will have access to facades, roofing and portals wherein the checks of roofs and gutters, cleanliness and testing of the facings, stained-glass windows and portals, whose artistic interest is so outstanding, will be carried out.

The following variables can be controlled in a practical embodiment of the invention, by means of the installation of the corresponding sensors and/or sensorized measuring instruments:
- speed of wind (anemometer);
- humidity of the air (hygrometer);
- moisture of stone (hygrometric control probe);
- atmospheric pollution;
- amount of rainfall (rain gauge);
- movement caused (seismometer);
- temperature (thermometer-sensor);
- visual control (optical camera), and;
- cracks (crack measuring instrument)
in such a way that said sensors and/or measuring instruments-sensors, installed in the appropriate place of the monument, will periodically take measurements that will be sent to the peripheral computer which they are in communication with.

## Claims

1. System for the follow-up, control and management of monuments and buildings, being useful to carry out a continuous follow-up and control of the evolution that monuments and buildings, mainly those belonging to the historic-artistic heritage, undergo, with the passing of time, in order to be able to act promptly and appropriately for the preservation of the monuments and buildings, **characterized in that** the system comprises:
- a plurality of sensors and/or measuring instruments-sensors (1) installed strategically in the structure of a monument (2) to be controlled;
- a peripheral computer (3) connected with the plurality of sensors and/or measuring instruments-sensors (1) regarding the corresponding monument (2), the peripheral computer being provided with databases (4) wherein standard parameters regarding the variables to be controlled are stored;
- a central computer (5) connected with different peripheral computers (3) regarding the monuments (2) to be controlled and managed.

2. System for the follow-up, control and management of monuments and buildings, according to claim 1, **characterized in that** the plurality of sensors and/or measuring instruments-sensors (1) will periodically communicate the measurements taken with regard to the different variables to be controlled to the peripheral computer (3).

3. System for the follow-up, control and management of monuments and buildings, according to any of claims 1 or 2, **characterized in that** the measurements communicated by the plurality of sensors and/or measuring instruments-sensors (1) to the corresponding peripheral computer (3) are managed by said peripheral computer (3) comparing the measurements with the standard ones stored in the databases (4) thereof, in order to send to the central computer (5), which it is in communication with, an alarm signal if the measurements taken are higher than the stored standard measurements.

4. System for the follow-up, control and management of monuments and buildings, according to any of the preceding claims, **characterized in that** the information desired from any of the peripheral computers (3) regarding the corresponding controlled monuments (2) communicated with the pheripheral computers can be obtained from the central computer (5).

5. System for the follow-up, control and management of monuments and buildings, according to any of claims 1, 2 or 3, **characterized in that** the information desired from any of the peripheral computers (3) regarding the corresponding controlled monuments (2) can be obtained by means of a PDA (7) or a mobile telephone (6).

6. System for the follow-up, control and management of monuments and buildings, according to claim 1, **characterized in that** the variables to be controlled by the plurality of sensors and/or measuring instruments-sensors (1) that inform the corresponding peripheral computer may be (3):
- speed of wind (anemometer);
- humidity of the air (hygrometer);
- moisture of stone (hygrometric control probe);
- atmospheric pollution;
- amount of rainfall (rain gauge);
- movement caused (seismometer);
- temperature (thermometer-sensor);
- visual control (optical camera), and;
- cracks (crack measuring instrument).
